# EUROPÄISCHE PATENTANMELDUNG

(11) **EP 3 767 770 A1**
(43) Veröffentlichungstag der Anmeldung: **20.01.2021**
(21) Anmeldenummer: 19186809.0
(22) Anmeldetag: 17.07.2019
(51) Int. Cl.: H02J 3/06

(54) **VERFAHREN ZUM STEUERN EINES AUSTAUSCHES VON ENERGIEN INNERHALB EINES ENERGIESYSTEMS SOWIE ENERGIESYSTEM**

(71) Anmelder: Siemens Aktiengesellschaft, 80333 München (DE)
(72) Erfinder: Metzger, Michael, 85570 Markt Schwaben (DE); Niessen, Stefan, 91056 Erlangen (DE); Schreck, Sebastian, 90429 Nürnberg (DE); Thiem, Sebastian, 91413 Neustadt an der Aisch (DE)

(57) **Zusammenfassung**

Es wird ein Verfahren zum Steuern eines Austausches von Energien (E1, E2) mittels einer Steuerungszentrale innerhalb eines Energiesystems (1) mit mehreren Energiesubsystemen (21,...,27) vorgeschlagen, wobei die Energiesubsysteme (21,...,27) für den Austausch mittels eines für die jeweilige Form der Energie (E1, E2) spezifischen Energienetzes (41,...,44) wenigstens teilweise untereinander verbunden sind, gekennzeichnet durch die Schritte:
- Empfangen wenigstens eines Datensatzes aus wenigstens einem der Energiesubsysteme (21,...,27) durch die Steuerungszentrale, wobei der Datensatz wenigstens jeweils einen maximalen Wert für eine erste und zweite über das Energiesubsystem (21,...,27) auszutauschende Energie (E1, E2) umfasst;
- Lösen eines Optimierungsproblems durch die Steuerungszentrale basierend auf dem empfangenen Datensatz, wobei das Lösen unter einer die Energien (E1, E2) koppelnden derartigen Nebenbedingung erfolgt, dass ein Austausch der ersten Energie (E1) einen Austausch der zweiten Energie (E2) bedingt; und
- Steuern des Austausches der ersten und zweiten Energie (E1, E2) gemäß der Lösung des Optimierungsproblems durch die Steuerungszentrale.

Weiterhin betrifft die Erfindung ein Energiesystem (1).

## Beschreibung

Die Erfindung betrifft ein Verfahren zum Steuern eines Austausches von Energien innerhalb eines Energiesystems gemäß dem Oberbegriff des Patentanspruches 1 sowie ein Energiesystem gemäß dem Oberbegriff des Patentanspruches 8.

Typischerweise umfasst ein Energiesystem, beispielsweise ein Stadtviertel oder eine Gemeinde, mehrere Energiesubsysteme, beispielsweise Gebäude. Die Energiesubsysteme umfassen typischerweise jeweils verschiedene energietechnische Anlagen, insbesondere Energiewandlungsanlagen, Verbrauchsanlagen und/oder Speicheranlagen.

Hierbei können die Energiesubsysteme über mehrere verschiedene Energienetze Energie untereinander austauschen. Mit anderen Worten sind die Energiesubsysteme typischerweise über mehrere verschiedene Energienetze zum Austausch verschiedener Energieformen miteinander gekoppelt. Beispielsweise sind die Energiesubsysteme an ein Stromnetz und wenigstens ein Teil der Energiesubnetze an ein Gasnetz und/oder an ein Fernwärmenetz, Nahwärmenetz und/oder Kältenetz angeschlossen.

Beispielsweise umfasst eines der Energiesubsysteme ein Blockheizkraftwerk (abgekürzt BHKW). Das Blockheizkraftwerk nimmt Gas über ein Gasnetz auf und stellt, beispielsweise für weitere Energiesubsysteme oder für sein eigenes Energiesubsystem, Strom und Wärme bereit. Insbesondere wird Strom und Wärme für weitere Energiesubsysteme bereitgestellt, falls der erzeugte Strom und die erzeugte Wärme durch das eigene erzeugende Energiesubsystem nicht vollständig genutzt werden soll. Mit anderen Worten werden der erzeugte Strom und die erzeugte Wärme in ein Stromnetz beziehungsweise ein Wärmenetz eingespeist, und somit auf die weiteren Energiesubsysteme übertragbar. Alternativ oder ergänzend könnte eine energietechnische Anlage, welche nicht vollständig ausgelastet ist, durch ein weiteres Energiesubsystem verwendet werden.

Grundsätzlich ist eine Koordination des Austausches der Energien zwischen den Energiesubsystemen innerhalb des Energiesystems erforderlich. Das ist insbesondere deshalb der Fall, da der Austausch bezüglich einer zu optimierenden Größe möglichst effizient erfolgen soll. Die zu optimierende Größe wird im Rahmen von Optimierungsproblemen als Zielfunktion bezeichnet. Mit anderen Worten soll der Austausch der Energie derart gesteuert werden, dass dieser bezüglich der Zielfunktion möglichst optimal ist. Hierzu wird die Zielfunktion optimiert, das heißt möglichst minimiert oder maximiert. Mit anderen Worten wird hierzu eine Steuerungszentrale verwendet, die eine Optimierung durchführt, das heißt ein Optimierungsproblem löst. Die Zielfunktion kann die Emissionen des Energiesystems, beispielsweise Kohlenstoffdioxidemissionen, oder Betriebskosten des Energiesystems charakterisieren oder modellieren. Durch die Optimierung wird somit sichergestellt, dass der Energieverbrauch durch eine entsprechende Energieerzeugung möglichst optimal, das heißt beispielsweise durch eine möglichst geringe Kohlenstoffdioxidemission beziehungsweise Gesamtkohlenstoffdioxidemission des Energiesystems, gedeckt wird. Hierbei erfolgt die eigentliche Optimierung, das heißt das Lösen des Optimierungsproblems, aufgrund der hohen Komplexität des Problems mittels numerischer Verfahren (Optimierungsverfahren). Die Lösung des Optimierungsproblems liegt dann, zumindest in einem Zeitbereich, einer möglichst optimalen Steuerung des Energiesystems bezüglich des Energieaustausches zwischen seinen Energiesubsystemen zugrunde.

Soll im Rahmen des Optimierungsproblems der Austausch von verschiedenen Formen von Energien (Energieformen) berücksichtigt werden, so ergeben sich mehrere Herausforderungen. Abgesehen von rechtlichen Aspekten, kann selbst bei einer vollständigen Kenntnis aller energietechnischen Anlagen innerhalb der Energiesubsysteme und deren Eigenschaften beziehungsweise Modellen, beim Umfang eines solchen Optimierungsproblems nur noch schwer ein globales Optimum, das heißt eine globale Lösung, ermittelt werden. Daher ist es vorteilhaft, wenn ein bezüglich der Energiesubsysteme lokales Energiemanagementsystem eine hinreichende Kenntnis über das jeweilige Energiesubsystem hat und den Betrieb des jeweiligen Energiesubsystems optimiert. Die Koordination zwischen den einzelnen Energiesubsystemen bezüglich des Austausches der verschiedenen Energieformen erfolgt jedoch bezüglich der Energiesubsysteme zentralisiert mittels der Steuerungszentrale.

Der vorliegenden Erfindung liegt die Aufgabe zugrunde, einen effizienteren Austausch verschiedener Formen von Energien zwischen Energiesubsystemen eines Energiesystems bereitzustellen.

Die Aufgabe wird durch ein Verfahren mit den Merkmalen des unabhängigen Patentanspruches 1 sowie durch ein Energiesystem mit den Merkmalen des unabhängigen Patentanspruches 9 gelöst. In den abhängigen Patentansprüchen sind vorteilhafte Ausgestaltungen und Weiterbildungen der Erfindung angegeben.

Das erfindungsgemäße Verfahren zum Steuern eines Austausches von Energien mittels einer Steuerungszentrale innerhalb eines Energiesystems mit mehreren Energiesubsystemen, wobei die Energiesubsysteme für den Austausch mittels eines für die jeweilige Form der Energie spezifischen Energienetzes wenigstens teilweise untereinander verbunden sind, ist wenigstens durch die folgenden Schritte gekennzeichnet:
- Empfangen wenigstens eines Datensatzes aus wenigstens einem der Energiesubsysteme durch die Steuerungszentrale, wobei der Datensatz wenigstens jeweils einen maximalen Wert für eine erste und zweite über das Energiesubsystem auszutauschende Energie umfasst;
- Lösen eines Optimierungsproblems durch die Steuerungszentrale basierend auf dem empfangenen Datensatz, wobei das Lösen unter einer die Energien koppelnden derartigen Nebenbedingung erfolgt, dass ein Austausch der ersten Energie einen Austausch der zweiten Energie bedingt; und
- Steuern des Austausches der ersten und zweiten Energie gemäß der Lösung des Optimierungsproblems durch die Steuerungszentrale.

Der Begriff des Steuerns umfasst vorliegend ebenfalls ein Regeln. Insbesondere ist das erfindungsgemäße Verfahren ein Bestandteil einer modellprädikativen Regelung.

Durch eine Leistung innerhalb eines Zeitbereiches ergibt sich eine bestimmte Energie in diesem Zeitbereich, die bereitgestellt wird, erzeugt wird, verbraucht wird, gespeichert und/oder ausgetauscht wird. In diesem Sinne sind die Begriffe Energie und Leistung in der vorliegenden Erfindung äquivalent und sind somit untereinander austauschbar.

Bei der Steuerungszentrale kann es sich um eine bezüglich der Energiesubsysteme zentrale Koordinationsplattform handeln, insbesondere um einen zentralen Server. Hierbei ist die Steuerungszentrale bezüglich des Steuern des Austausches zentral, das heißt diese muss nicht örtlich zentralisiert vorliegen. Beispielsweise ist die Steuerungszentrale räumlich verteilt in einem oder mehreren Rechenzentren und kann die numerischen Berechnungen bezüglich des Optimierungsproblems ebenfalls verteilt durchführen (englisch: distributed computing). Mit anderen Worten ist die Steuerungszentrale eine zum gemeinschaftlichen Steuern des Energieaustausches zwischen den Energiesubsystemen ausgebildete Steuereinheit.

Die Steuerungszentrale kann weiterhin über ein Datennetzwerk, insbesondere über das Internet, mit den Energiesubsystemen kommunizieren und Daten beziehungsweise Datensätze austauschen. Dabei muss die Steuerungszentrale nicht zwangsläufig in der durch das Energiesystem abgedeckten Region liegen oder Bestanteil des Energiesystems sein. Besonders bevorzugt ist die Steuerungszentrale Bestandteil einer lokalen Energiemarktplattform. Die lokale Energiemarktplattform steuert beziehungsweise koordiniert den Austausch der Energien innerhalb des Energiesystems, das heißt unter beziehungsweise zwischen den Energiesubsystemen des Energiesystems (lokaler Energiemarkt). Die Steuerungszentrale kann besonders bevorzugt einen lokalen Energiemarkt ausbilden.

Gemäß der vorliegenden Erfindung umfasst das Energiesystem, beispielsweise ein Staat, ein Land, eine Stadt, eine industrielle Anlage, oder eine Gemeinde, mehrere Energiesubsysteme, beispielsweise Gebäude. Wenigstens ein Teil der Energiesubsysteme ist untereinander zum Austausch mehrerer Energieformen über bezüglich der Energieform spezifische Energienetze gekoppelt. Beispielsweise sind die Energiesubsysteme über ein Stromnetz zum Austausch elektrischer Energie (Strom) und über ein Wärmenetz zum Austausch von Wärme miteinander gekoppelt. Die Energienetze können ein Stromnetz, ein Wärmenetz, insbesondere ein Nahwärmenetz und/oder Fernwärmenetz, ein Kältenetz und/oder ein Gasnetz sein. Weitere Energienetze zum Austausch weiterer Energieformen können alternativ oder ergänzend vorgesehen sein. Mit anderen Worten ist das Energiesystem als multimodales Energiesystem ausgebildet.

Die Energiesubsysteme weisen typischerweise energietechnische Anlagen auf, beispielsweise Energiewandlungsanlagen, Verbrauchsanlagen und/oder Speicheranlagen. Die energietechnischen Anlagen koppeln typischerweise verschiedene Energieformen. Beispielsweise ist eine Energiewandlungsanlage ein Blockheizkraftwerk, welches chemische Energie in Form von Gas bezieht, das heißt verbraucht, und dadurch Wärme und elektrische Energie (Strom) bereitstellt beziehungsweise erzeugt.

Das vorliegende erfindungsgemäße Verfahren ermöglicht eine effiziente Steuerung des Austausches der verschiedenen Energieformen zwischen den Energiesubsystemen, das heißt innerhalb des Energiesystems, mittels der Steuerungszentrale.

Hierzu wird in einem ersten Schritt des erfindungsgemäßen Verfahrens wenigstens ein Datensatz aus wenigstens einem der Energiesubsysteme durch die Steuerungszentrale empfangen, wobei der Datensatz wenigstens jeweils einen maximalen Wert für eine erste und zweite über das Energiesubsystem auszutauschende Energie umfasst.

Hierbei kann der Datensatz aus mehreren Datensätzen zusammengesetzt sein. Beispielsweise ist ein erster Datensatz für den maximalen Wert der ersten Energie sowie ein zweiter Datensatz für den maximalen Wert der zweiten Energie vorgesehen sein.

Mit anderen Worten übermittelt im ersten Schritt wenigstens eines der Energiesubsysteme einen maximalen Wert für ein Erzeugen, ein Bereitstellen, ein Speichern und/oder ein Verbrauchen der ersten Energie sowie einen maximalen Wert für ein Erzeugen, ein Bereitstellen, ein Speichern und/oder ein Verbrauchen der zweiten Energie. Typischerweise weisen die erste Energie und die zweite Energie hierbei eine verschiedene Form auf. Mit anderen Worten sind die erste Energie und die zweite Energie verschiedene Energieformen. Beispielsweise ist die erste Energie Strom und die zweite Energie Wärme.

Umfasst das Energiesubsystem beispielsweise eine Wärmepumpe, so bezieht die Wärmepumpe Strom (erste Energie) und wandelt diese in Wärme (zweite Energie). Ein solches Energiesubsystem übermittelt gemäß der vorliegenden Erfindung mittels eines Datensatzes einen maximalen Wert für den durch die Wärmepumpe zu beziehenden Strom sowie einen maximalen Wert für die durch die Wärmepumpe bereitstellbare beziehungsweise erzeugbare Wärme an die Steuerungszentrale. Mit anderen Worten weiß die Steuerungszentrale sinnbildlich, welche erste Energie das Energiesubsystem maximal beziehen möchte, um beispielsweise einen maximalen Wert der zweiten Energie zu erzeugen. Weitere Daten zur Übermittlung an die Steuerungszentrale können vorgesehen sein. Insbesondere wird ergänzend eine Vergütungskondition, beispielsweise ein minimaler Preis zur Bereitstellung der zweiten Energie sowie ein maximaler Preis zum Bezug der ersten Energie, an die Steuerungszentrale übermittelt werden. Mit anderen Worten können ergänzend Angebote für den Kauf und/oder Verkauf der ersten und/oder zweiten Energie durch das Energiesubsystem an die Steuerungszentrale übermittelt werden. Typischerweise ist ein solches Angebot durch eine maximale Energiemenge und einen maximalen Preis für den Kauf der Energiemenge oder durch eine maximale Energiemenge und einen minimalen Preis für den Verkauf der Energiemenge gekennzeichnet.

In einem zweiten Schritt des erfindungsgemäßen Verfahrens wird ein Optimierungsproblem durch die Steuerungszentrale basierend auf dem empfangenen Datensatz gelöst, insbesondere numerisch gelöst, wobei das Lösen unter einer die Energien koppelnden derartigen Nebenbedingung erfolgt, dass ein Austausch der ersten Energie einen Austausch der zweiten Energie bedingt; oder ein Austausch der zweiten Energie einen Austausch der ersten Energie bedingt.

Mit anderen Worten ist der Austausch der ersten Energie an den Austausch der zweiten Energie oder der Austausch der zweiten Energie an den Austausch der ersten Energie technisch, beispielsweise aufgrund der hierzu verwendeten energietechnischen Anlage, gekoppelt. Dadurch wird die erste Energie nicht unabhängig von der zweiten Energie beziehungsweise die zweite Energie nicht unabhängig von der ersten Energie ausgetauscht. Dies stellt die erfindungsgemäße Nebenbedingung bei der Optimierung sicher. Die Nebenbedingung kann durch eine funktionale Abhängigkeit der ersten Energie von der zweiten Energie, beispielsweise durch eine lineare Beziehung zwischen den Energien, dargestellt werden. Vorteilhafterweise wird dadurch sichergestellt, dass eine Wärmepumpe nur dann Strom bezieht (erste Energie), wenn innerhalb des Energiesystems ein entsprechender Wärmebedarf vorliegt. Mit anderen Worten ist in diesem Fall das Beziehen der elektrischen Energie abhängig von der Abnahme oder dem Verbrauch der durch die elektrische Energie erzeugten Wärme. Dies ist sinnvoll, da die elektrische Energie nur verbraucht werden sollte, wenn ein Bedarf an Wärme innerhalb des Energiesystems besteht. Die vorliegende Nebenbedingung stellt dies vorteilhafterweise durch die technisch bedingte Kopplung der ersten und zweiten Energie sicher.

Grundsätzlich können hierbei drei verschiedene Ausgestaltungen unterschieden werden.

In einer ersten Ausgestaltung kann die erste Energie für das Erzeugen oder Bereitstellen der zweiten Energie bezogen werden.

In einer zweiten Ausgestaltung können die erste Energie und die zweite Energie parallel bereitgestellt beziehungsweise erzeugt werden.

In einer dritten Ausgestaltung können die erste Energie und die zweite Energie für ein Bereitstellen beziehungsweise Erzeugen einer weiteren Energie verwendet werden.

Bei der ersten und zweiten Ausgestaltung sind die erste und zweite Energie komplementär. Bei der dritten Ausgestaltung sind die erste und zweite Energie substituierbar, das heißt die Energien können grundsätzlich gegeneinander ausgetauscht werden, um die weitere Energie zu erzeugen. Mit anderen Worten liegen der Steuerungszentrale in diesem Sinnen komplementäre Angebote oder substituierbare Angebote vor.

Eine Optimierung (Lösen eines Optimierungsproblems) im Sinne der vorliegenden Erfindung ist ein Verfahren zur Minimierung oder Maximierung einer Zielfunktion eines komplexen Energiesystems. Die Minimierung beziehungsweise Maximierung der Zielfunktion ist typischerweise äußerst komplex und kann daher lediglich numerisch erfolgen. Die Zielfunktion charakterisiert hierbei eine Eigenschaft oder eine Größe des Energiesystems, beispielsweise die Kohlenstoffdioxidemissionen oder die Betriebskosten des Energiesystems. Die Zielfunktion weist Parameter und Variablen auf. Das Ergebnis der Optimierung sind die Werte der Variablen. Die Parameter sind fest und parametrisieren die für das Energiesystem spezifische Zielfunktion. Typischerweise wird kein exaktes Minimum oder Maximum der Zielfunktion erreicht, sondern es ist ausreichend diesem, beispielsweise durch ein Festlegen eines Schwellenwertes, ausreichend nahe zu kommen. Weiterhin erfolgt die Optimierung typischerweise unter einer Berücksichtigung mehrerer weiterer, beispielsweise physikalischer, Nebenbedingungen.

Beispielsweise charakterisiert die Zielfunktion die Gesamtkohlenstoffdioxidemission des Energiesystems. Die Gesamtkohlenstoffdioxidemission umfasst die einzelnen Kohlenstoffdioxidemissionen der Energiesubsysteme des Energiesystems. Beispielsweise stellen einige der Energiesubsysteme eine bestimmte elektrische Energie/Leistung für eine spezifische Kohlenstoffdioxidmenge bereit. Somit sind hierbei die elektrischen Energien/Leistungen die Variablen der Zielfunktion und die Kohlenstoffdioxidmengen pro erzeugter elektrischer Energie/Leistung (spezifische Kohlenstoffdioxidmenge) die Parameter der Zielfunktion. Durch die Optimierung wird die Gesamtkohlenstoffdioxidemission (Zielfunktion) minimiert. Dadurch kann des Energiesystem insgesamt möglichst optimal bezüglich seiner Kohlenstoffdioxidemission durch die Steuerungszentrale gesteuert und somit betrieben werden.

In einem dritten Schritt des erfindungsgemäßen Verfahrens wird der Austausch der ersten und zweiten Energie gemäß der Lösung des Optimierungsproblems durch die Steuerungszentrale gesteuert.

Dadurch wird vorteilhafterweise sichergestellt, dass der ermittelte möglichst optimale Austausch in der physikalischen Realität bewirkt wird.

Vorteilhafterweise ermöglicht es die vorliegende Erfindung, dass auch energetische Überschüsse innerhalb des Energiesystems effektiv angeboten werden können und für weitere Energiesubsysteme bereitgestellt werden können. Weiterhin werden die bereits vorhandene Infrastruktur und die vorliegenden energietechnischen Anlagen möglichst optimal ausgelastet. Ferner ermöglicht die vorliegende Erfindung den Energiesubsystemen verschiedene Energieformen auszutauschen, ohne dass am Ende der Austausch physikalisch nicht möglich oder unsinnig ist.

Das erfindungsgemäße Energiesystem umfasst eine Steuerungszentrale zur Steuerung eines Austausches von Energien zwischen mehreren Energiesubsystemen des Energiesystems. Das erfindungsgemäße Energiesystem ist dadurch gekennzeichnet, dass die Steuerungszentrale zur Durchführung eines Verfahrens gemäß der vorliegenden Erfindung und/oder einen ihrer Ausgestaltungen ausgebildet ist.

Es ergeben sich zum Verfahren zum Steuern eines Austausches von Energien gleichartige und gleichwertige Vorteile.

In einer vorteilhaften Ausgestaltung der Erfindung umfassen die Energiesubsysteme energietechnische Anlagen zur Erzeugung und/oder Bereitstellung und/oder zur Speicherung und/oder zum Verbrauch der ersten und/oder zweiten Energie.

Mit anderen Worten können die Energiesubsysteme Energie erzeugen, bereitstellen, speichern und/oder verbrauchen. Durch die Erzeugung und/oder Bereitstellung einer Energie kann eine entsprechende Last oder ein entsprechender Bedarf innerhalb des erzeugenden und/oder bereitstellenden Energiesystems und/oder eine Last oder ein Bedarf eines oder mehrere weiterer Energiesubsysteme gedeckt werden.

Gemäß einer vorteilhaften Ausgestaltung der Erfindung ist die Form der ersten Energie (erste Energieform) von der Form der zweiten Energie (zweite Energieform) verschieden.

Dadurch werden vorteilhafterweise die erste und zweite Energieform bedingt miteinander gekoppelt. Mit anderen Worten bedingt der Austausch der ersten Energieform den Austausch der zweiten Energieform oder der Austausch der zweiten Energieform den Austausch der ersten Energieform. Der Austausch der ersten Energieform erfolgt typischerweise mittels eines ersten Energienetzes. Der Austausch der zweiten Energieform erfolgt typischerweise mittels eines zweiten Energienetzes, wobei das zweite Energienetz vom ersten Energienetz verschieden ist. Beispielsweise ist die erste Energieform eine elektrische Energie und die zweite Energieform eine thermische Energie oder Wärme. Die erste Energieform wird somit über ein elektrisches Energienetz (Stromnetz) und die zweite Energieform über ein thermisches Energienetz, beispielsweise ein Nahwärmenetz oder Fernwärmenetz, ausgetauscht beziehungsweise übertragen.

In einer vorteilhaften Ausgestaltung der Erfindung wird die erste Energie durch das Energiesubsystem zur Erzeugung der zweiten Energie verwendet.

Vorteilhafterweise stellt die vorliegende Erfindung sicher, dass die erste Energie ausgetauscht wird, das heißt beispielsweise durch das Energiesubsystem bezogen oder verwendet wird, wenn die zweite Energie ebenfalls ausgetauscht wird. Mit anderen Worten ist ein Bedarf an der zweiten Energie innerhalb des Energiesystems, beispielsweise durch das Energiesubsystem selbst und/oder weitere Energiesubsysteme, erforderlich. In diesem Fall ist der Austausch der ersten Energie energetisch sinnvoll. Beispielsweise bezieht eine Kompressionskältemaschine elektrische Energie dann, wenn ein Bedarf an Kälte innerhalb des Energiesystems besteht. Dadurch ist sichergestellt, dass der Bezug der elektrischen Energie ebenfalls nur dann erfolgt, wenn ein solcher Bedarf an Kälte innerhalb des Energiesystems besteht. Mit anderen Worten ist der Austausch der ersten Energie an den Bedarf der zweiten Energie gekoppelt. Eine solche Kopplung oder ein solcher Austausch kann ebenfalls als komplementäre Kopplung beziehungsweise komplementärer Austausch bezeichnet werden. Ist die Steuerungszentrale Bestandteil eines Energiemarktes, so sind dadurch ebenfalls die Angebote bezüglich der ersten Energie und zweiten Energie miteinander komplementär gekoppelt. Es liegen somit komplementäre Angebote vor.

Gemäß einer vorteilhaften Ausgestaltung der Erfindung werden die erste und zweite Energie durch das Energiesubsystem erzeugt.

Mit anderen Worten sind die erste und zweite Energie durch ihre Erzeugung miteinander gekoppelt. Insbesondere werden diese durch dieselbe energietechnische Anlage erzeugt. Beispielsweise erzeugt ein Blockheizkraftwerk durch den Bezug von Gas (chemische Energie) elektrische Energie (erste Energie) und Wärme (zweite Energie). Die elektrische Energie und die Wärme werden durch das Blockheizkraftwerk parallel erzeugt. Es ist daher vorteilhaft, den Austausch der durch das Blockheizkraftwerk erzeugten elektrischen Energie mit dem Austausch der durch das Blockheizkraftwerk erzeugten thermische Energie zu koppeln. Die vorliegende Erfindung macht dies durch die den Austausch der Energien koppelnde Nebenbedingung möglich. Auch in diesem Fall liegt eine komplementäre Kopplung beziehungsweise ein komplementärer Austausch vor.

In einer vorteilhaften Ausgestaltung der Erfindung werden die erste und zweite Energie durch das Energiesubsystem zur Erzeugung einer dritten Energie verwendet.

Mit anderen Worten bezieht das Energiesubsystem die erste und/oder die zweite Energie zur Erzeugung der dritten Energie. Mit anderen Worten kann zur Erzeugung der dritten Energie die erste Energie durch die zweite Energie oder die zweite Energie durch die erste Energie wenigstens teilweise substituiert werden. Dadurch liegt in diesem Sinne ein Austausch von Substituten vor. Beispielsweise wird ein Wärmebedarf durch den Austausch beziehungsweise den Bezug von Gas oder elektrischer Energie gedeckt. Der Austausch der ersten Energie ist wiederum über eine entsprechende Nebenbedingung mit dem Austausch der zweiten Energie gekoppelt (und umgekehrt).

Gemäß einer vorteilhaften Ausgestaltung der Erfindung wird die Nebenbedingung durch ***aP*₁(*t*) ≤ *bP₂*(*t*)** festgelegt, wobei ***P*₁(*t*)** die zur ersten Energie zugehörige zeitabhängige Leistung und ***P*₂(*t*)** die zur zweiten Energie zugehörige zeitabhängige Leistung ist, und ***a,b*** Konstanten sind.

Die Optimierung durch die Steuerungszentrale erfolgt somit unter der Nebenbedingung ***aP*₁(*t*) ≤ *bP₂*(*t*)*.*** Mit anderen Worten wird die Zielfunktion unter Berücksichtigung der Nebenbedingung ***aP*₁(*t*) *≤bP*₂(*t*)** minimiert oder maximiert. Die Nebenbedingung ***aP*₁(*t*) ≤ *bP₂*(*t*)** ist insbesondere für einen komplementären Austausch, wie obenstehend beschrieben, vorteilhaft.

Die Nebenbedingung ***aP*₁(*t*) ≤ *bP₂*(*t*)** umfasst zwei Nebenbedingungen beziehungsweise Kopplungen. Eine erste Nebenbedingung beziehungsweise erste Kopplung ist durch ***P*₁(*t*)** = ***cP*₂(*t*)** gegeben, wobei ***c* = *b*/*a*** ist. Mit anderen Worten ist die zeitabhängige erste Leistung ***P*₁(*t*)** proportional zur zeitabhängigen zweiten Leistung. Eine zweite Nebenbedingung beziehungsweise zweite Kopplung ist durch ***aP*₁(*t*)** < ***bP₂*(*t*)** gegeben. Hierbei ist die erste Kopplung restriktiver als die zweite Kopplung und führt gegebenenfalls dazu, dass kein Austausch der Energien erfolgt. Die zweite Kopplung schwächt in diesem Sinne die erste Kopplung ab. Bei der zweiten Kopplung kann auch nur eine der Energien ausgetauscht werden. Beispielsweise wird nur elektrische Energie bezogen, wobei eine dadurch erzeugte Wärme gemäß der zweiten Kopplung lediglich eine Maximalgrenze aufweist und innerhalb der Energiesubsysteme zwischengespeichert werden müsste. Die Konstanten beziehungsweise Parameter ***a,b,c*** können, insbesondere von einem Betreiber des jeweiligen Energiesubsystems, beispielsweise mittels Messdaten, festgelegt werden.

In einer vorteilhaften Weiterbildung der Erfindung wird die Nebenbedingung durch ***P*₁(*t*)Δ*t*/*E*_{max,1}** + **P₂(t)Δ*t*/*E*_{max,2} ≤ 1** festgelegt, wobei ***P*₁(*t*)** die zur ersten Energie zugehörige zeitabhängige Leistung und ***P*₂(*t*)** die zur zweiten Energie zugehörige zeitabhängige Leistung ist, ***E*_{max,1}** der maximale Wert der ersten Energie, ***E*ₘₐₓ,₂** der maximale Wert der zweiten Energie, und **Δ*t*** die Zeitschrittweite beim Lösen des Optimierungsproblems ist. Mit anderen Worten wird die Nebenbedingung ***P*₁(*t*)Δt/*E*_{max,1}** + ***P*₂(*t*)Δ*t*/*E*_{max,2} ≤** 1 beim Lösen des Optimierungsproblems berücksichtigt. Hierbei sind grundsätzlich ***P*₁(*t*)** und ***P*₂(*t*)** Variablen der dem Optimierungsproblem zugrundeliegenden Zielfunktion. Innerhalb des Zeitintervalls **Δ*t*** werden die Energien ***E*₁ = *P*₁Δ*t*** und ***E*₁ = *P*₂Δ*t*** ausgetauscht. Die Nebenbedingung ***P*₁(*t*)Δ*t*/*E*_{max,1}** + ***P*₂(*t*)Δ*t*/*E*_{max,2} ≤** 1 ist besonders für Substitute, wie obenstehend beschrieben, vorteilhaft. Durch diese Nebenbedingung wird sichergestellt, dass die normierte Summe aus den Leistungen den Wert 1 nicht überschreitet. Anwendungsbeispiel für einen solchen Austausch ist, dass ein Energiesubsystem eine Wärmelast beziehungsweise einen Wärmebedarf mittels elektrischer Energie oder Gas decken könnte. Hierbei sind Strom und Gas die Substitute, die über die Nebenbedingung ***P*₁(*t*)Δ*t*/*E*_{max,1}** + ***P*₂(*t*)Δ*t*/*E*_{max,2} ≤** 1 miteinander gekoppelt sind.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: ein Energiesystem mit mehreren Energienetzen und entsprechenden Energieformen; und
- Figur 2: ein Ablaufdiagramm eines Verfahrens gemäß einer Ausgestaltung der vorliegenden Erfindung;

Gleichartige, gleichwertige oder gleichwirkende Elemente können in einer der Figuren oder in den Figuren mit denselben Bezugszeichen versehen sein.

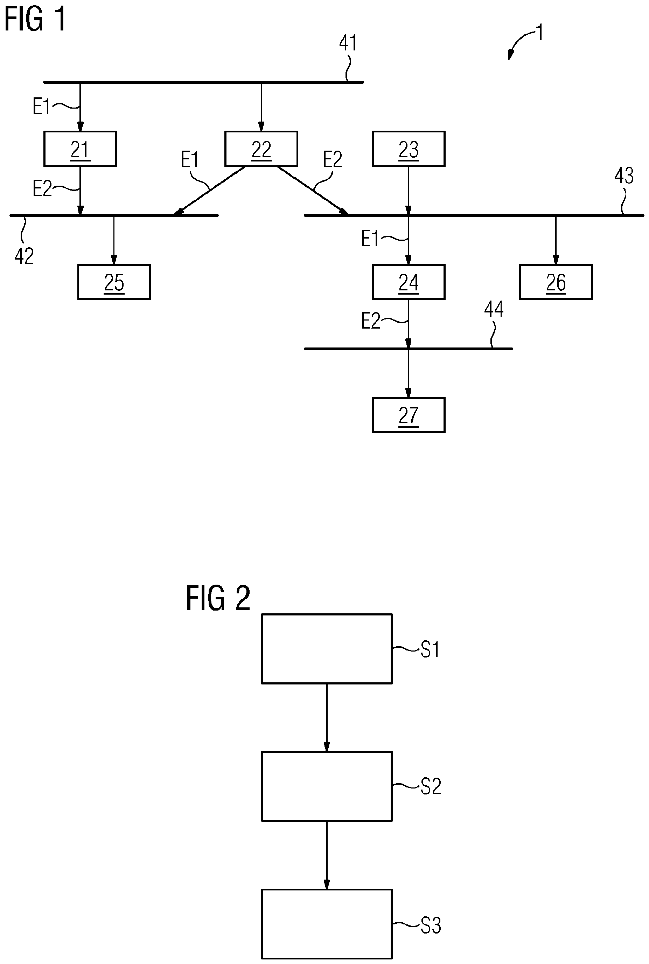

Die Figur 1 zeigt ein Energiesystem 1 mit mehreren Energiesubsystemen 21,..., 27 und mehreren Energienetzen 41,..., 44. Die Energienetze 41,...,44 koppeln die Energiesubsysteme 21,...,27 bezüglich des Austausches von Energien beziehungsweise Energieformen. Mit anderen Worten ist das Energiesystem 1 ein multimodales Energiesystem. Eine Steuerungszentrale (nicht dargestellt) steuert den Austausch der Energien zwischen den Energiesubsystemen 21,...,27 im Sinne der vorliegenden Erfindung. Demnach löst die Steuerungszentrale ein Optimierungsproblem unter Berücksichtigung wenigstens einer Nebenbedingung, wobei die Nebenbedingungen den Austausch verschiedener Formen von Energien oder äquivalent die entsprechenden Leistungen miteinander koppelt.

Die Energiesubsysteme 21,...,27 weisen zur vereinfachten Darstellung des Sachverhalts jeweils lediglich eine der folgenden energietechnischen Anlagen, nämlich einen Heizkessel 21, ein Blockheizkraftwerk 22, eine Photovoltaikanlage 23 oder eine Kompressionskältemaschine 24 oder einen Wärmeverbraucher 25, einen Stromverbraucher 26 oder ein Kälteverbraucher 27 auf. Reale Energiesubsysteme, beispielsweise ein Gebäude, können eine Mehrzahl von energietechnischen Anlagen aufweisen und sind typischerweise weitaus komplexer ausgestaltetet.

Die Energienetze sind ein Gasnetz 41, ein Wärmenetz 42, ein Stromnetz 43 sowie ein Kältenetz 44.

Das Energiesystem 1 kann ebenfalls aus Marktsicht beschrieben werden. So ist das Energiesystem 1 den Energienetzen 41,...,44 entsprechend mit einem Gasmarkt 41, einem Wärmemarkt 42, einem Strommarkt 43 und/oder einem Kältemarkt 44 gekoppelt. Können die Energiesubsysteme weiterhin Angebote für einen Kauf und/oder einen Verkauf (Austausch von Energie) einer oder mehrerer Energieformen abgeben, beispielsweise an eine bezüglich der Energiesubsysteme zentrale Koordinierungsplattform, die die Steuerungszentrale umfasst, so bildet das Energiesystem einen lokalen Energiemarkt beziehungsweise eine lokale Energiemarktplattform aus.

Die Energienetze 41,...,44 ermöglichen den Austausch von Energie beziehungsweise verschiedenen Energieformen zwischen den Energiesubsystemen 21,...,27. In diesem Sinne ist das Energiesystem 1 multimodal. Weiterhin ermöglichen die Energienetze 41,...,44 einen bezüglich des Energiesystems 1 externen Austausch von Energie. Beispielsweise wird Gas und/oder elektrische Energie (Strom) wenigstens teilweise extern bezogen oder eingespeist.

Gemäß dem Ausführungsbeispiel der Figur 1 können der Heizkessel 21 und das Blockheizkraftwerk 22 Gas aus dem Gasnetz 41 beziehen. Der Heizkessel 21 verwendet das Gas, um Wärme zu erzeugen. Demnach ist das Gas (chemische Energie) die erste Energie E1 und die Wärme (thermische Energie) die zweite Energie E2 im Sinne der vorliegenden Erfindung. Mit anderen Worten ist der Bezug des Gases (erste Energie E1) mit der Erzeugung der Wärme (zweite Energie E2) oder ihrem Verbrauch gekoppelt. Die durch den Heizkessel 21 erzeugte Wärme kann durch das Energiesubsystem des Heizkessels 21 direkt verbraucht werden und/oder für weitere Energiesubsysteme, insbesondere für den Wärmeverbraucher 25, über das Wärmenetz 42 bereitgestellt werden. Benötigt das Energiesubsystem des Heizkessels 21 innerhalb eines Zeitintervalls keine Wärme, so sollte nur Gas bezogen werden, wenn ein weiteres der Energiesubsysteme 21,...,27 einen Wärmebedarf aufweist. Somit ist der Austausch der ersten Energie E1 (Bezug des Gases) mit dem Austausch der zweiten Energie E2 (Bereitstellen der Wärme) gekoppelt. Die vorliegende Erfindung stellt diese Kopplung in der Steuerung durch die Steuerungszentrale mittels der den Austausch der Energien E1, E2 koppelnden Nebenbedingung sicher.

Zusätzlich zur Wärme erzeugt das Blockheizkraftwerk 22 elektrische Energie, das heißt Strom. Hierzu bezieht das Blockheizkraftwerk ebenfalls Gas vom Gasnetz 41. Das Blockheizkraftwerk 22 kann somit Wärme (erste Energie E1) und Strom (zweite Energie E2) zeitgleich erzeugen beziehungsweise bereitstellen. Mit anderen Worten sind für das Blockheizkraftwerk 22 die erste Energie E1 (Wärme) und die zweite Energie E2 (Strom) miteinander gekoppelt und können nicht unabhängig voneinander erzeugt beziehungsweise bereitgestellt werden.

Beispielsweise bezieht das Blockheizkraftwerk 22 innerhalb eines Zeitintervalls Gas vom Gasnetz 41, um einen Strombedarf innerhalb seines eigenen Energiesubsystems von 30 kWh zu decken. Hierbei fallen 50 kWh Abwärme, das heißt Wärme, an. Weist das Energiesubsystem des Blockheizkraftwerkes 22 keinen Wärmespeicher auf, so muss die erzeugte Wärme von 50 kWh durch das Energiesubsystem selbst verbraucht und/oder für die weiteren Energiesubsysteme 21,23,...,27 bereitgestellt werden. Beispielsweise weist das Energiesubsystem des Blockheizkraftwerkes 22 innerhalb des Zeitintervalls einen eigenen Wärmebedarf von 20 kWh auf, sodass noch 30 kWh für die weiteren Energiesubsysteme 21,23,...,27 bereitstellbar sind. Ist der Gasbedarf zur Erzeugung von 30 kWh Strom beispielsweise 100 kWh, so ist es vorteilhaft am Gasmarkt ein Kaufangebot (englisch: Buy-Order) über 40 kWh Gas und 60 kWh Gas einzustellen. Zusätzlich wird am Wärmemarkt ein Verkaufsangebot (englisch: Sell-Order) über 30 kWh eingestellt und an das Verkaufsangebot über 60 kWh Gas am Gasmarkt gekoppelt. Somit ist der maximale Wert der ersten Energie 30 kWh (30 kWh Wärme) und der maximale Wert der zweiten Energie 60 kWh (60 kWh Gas), die mittels des Datensatzes an die Steuerungszentrale übermittelt und durch diese empfangen werden. Die Kopplung der Energien beziehungsweise Angebote wird technisch durch die vorliegende Erfindung und/oder einer ihrer Ausgestaltungen ermöglicht. Hierdurch wird sichergestellt, dass das Gas nur dann bezogen wird, wenn das Verkaufsangebot für die zugehörige Wärme zur Ausführung kommt, das heißt durch die Lösung des Optimierungsproblems umfasst ist. Der Stromverbrauch muss dann gegebenenfalls anderweitig gedeckt werden.

Das Energiesystem 1 weist weiterhin ein Energiesubsystem mit einer Photovoltaikanlage 23 auf. Die Photovoltaikanlage 23 ist über das Stromnetz 43 mit der Kompressionskältemaschine 24 und dem Stromverbraucher 26 zum Austausch von elektrischer Energie gekoppelt. Mit anderen Worten können die Kompressionskältemaschine 24 sowie der Stromverbraucher 26 elektrische Energie über das Stromnetz 43 beziehen, wobei die elektrische Energie wenigstens teilweise durch die Photovoltaikanlage 23 erzeugt beziehungsweise bereitgestellt wird. Aus Marktsicht bietet die Photovoltaikanlage 23 mittels eines Verkaufsangebotes überschüssigen Strom am Strommarkt an. Die Kompressionskältemaschine 24 und/oder der Stromverbraucher 26 können diesen durch ein jeweiliges Kaufangebot beziehen.

Die Kompressionskältemaschine bezieht Strom (erste Energie E1) und erzeugt damit Kälte (zweite Energie E2). Demnach ist der Austausch der ersten Energie E1 (Strom) wiederum mit dem Austausch der zweiten Energie E2 (Kälte) gekoppelt. Diese Kopplung wird durch die vorliegende Erfindung in Form der Nebenbedingung sichergestellt, die beim Steuern des Austausches der Energien E1, E2 innerhalb des Energiesystems durch die Steuerungszentrale berücksichtigt wird.

Beispielsweise weist die Kompressionskältemaschine 24 eine Leistungszahl (englisch: Coefficient of Performance; abgekürzt COP) von 3 und eine maximale Kälteleistung von 27 kW auf. Liegt ein eigener Bedarf von 9 kW Kälte vor, so könnte die Kompressionskältemaschine 24 eine Kälteleistung von 18 kW über das Kältenetz 44 bereitstellen. Für die bereitstellbaren 18 kW Kälteleistung ist ein Strombezug von 6 kW durch die Kompressionskältemaschine 24 erforderlich. Mit anderen Worten sollten die 6 kW an elektrischer Energie nur dann vom Stromnetz 43 bezogen werden, wenn die 18 kW Kälteleistung über das Kältenetz 44 abgenommen werden. Mit anderen Worten ist die zweite Energie E2 (Kälte) mit der ersten Energie E1 (Strom) gekoppelt. Diese Kopplung wird wiederum durch die vorliegende Erfindung beim Steuern des Austausches der Energien berücksichtigt. Aus Marktsicht ist somit ein Verkaufsangebot über 18 kW Kälteleistung mit einem Kaufangebot am Strommarkt über 6 kW elektrischer Energie gekoppelt. Sobald es nun zur Ausführung des Verkaufsangebotes kommt (Lösung des Optimierungsproblems weist einen solchen Austausch auf), wird ebenfalls das Kaufangebot ausgeführt. Dadurch ist sichergestellt, dass das Energiesubsystem nur dann elektrischen Strom bezieht, wenn ein Kältebedarf vorliegt. Umfasst das Energiesubsystem der Kompressionskältemaschine beispielsweise einen Kältespeicher, so kann eine teilweise Entkopplung zwischen dem Bezug des Stromes und dem Verbrauch der dadurch erzeugten Kälte ermöglicht werden. Für die 9 kW eigenen Kältebedarf des Energiesubsystems der Kompressionskältemaschine wird ein entsprechendes Kaufangebot am Strommarkt über 3 kWh durchschnittliche Leistung eingestellt (Wert der Energie wird an Steuerungszentrale übermittelt).

Die Figur 2 zeigt ein Ablaufdiagramm eines Verfahrens gemäß einer Ausgestaltung der vorliegenden Erfindung.

Das Verfahren betrifft ein Steuern eines Austausches von Energien mittels einer Steuerungszentrale innerhalb eines Energiesystems mit mehreren Energiesubsystemen. Die Energiesubsysteme sind hierbei für den Austausch der Energien mittels eines für die jeweilige Form der Energie (Energieform) spezifischen Energienetzes wenigstens teilweise untereinander verbunden.

In einem ersten Schritt des Verfahrens wird wenigstens ein Datensatz aus wenigstens einem der Energiesubsysteme durch die Steuerungszentrale empfangen, wobei der Datensatz wenigstens jeweils einen maximalen Wert für eine erste und zweite über das Energiesubsystem auszutauschende Energie umfasst.

Ist die Steuerungszentrale ein Bestandteil eines Energiemarktes, so bedeutet dies aus Marktsicht, dass der Datensatz Angebote für einen Kauf und/oder einen Verkauf einer oder mehrerer Energieformen umfasst. Beispielsweise gibt das Energiesubsystem der Steuerungszentrale bekannt, dass es innerhalb eines bestimmten Zeitintervalls 6 kWh elektrische Energie beziehen möchte und 18 kWh Wärme innerhalb desselben Zeitintervalls bereitstellen kann. Mit anderen Worten umfasst der Datensatz in diesem Ausführungsbeispiel ergänzend zu den maximalen Werten der Energien einen maximalen Preis für den Kauf von 6 kWh elektrischer Energie (maximaler Wert der ersten Energie) und einen minimalen Preis für den Verkauf der 18 kWh Wärme (maximaler Wert der zweiten Energie) innerhalb des (lokalen) Energiemarktes. Weitere umfassendere Daten und/oder komplexer ausgestaltete Angebote können vorgesehen sein. Die übertragenden Preise können sich an Referenzpreisen orientieren. Entscheidend ist vorliegend lediglich, dass ein maximaler Wert der ersten und zweiten Energie, welche ausgetauscht werden sollen, an die Steuerungszentrale übermittelt wird.

In einem zweiten Schritt des Verfahrens wird ein Optimierungsproblem durch die Steuerungszentrale basierend auf dem empfangenen Datensatz gelöst, wobei das Lösen unter einer die Energien koppelnden derartigen Nebenbedingung erfolgt, dass ein Austausch der ersten Energie einen Austausch der zweiten Energie bedingt.

Mit anderen Worten werden die erste und zweite Energie nicht unabhängig voneinander ausgetauscht. Ein Austausch einer der Energien bedingt einen wenigstens teilweisen Austausch der anderen Energie. Hierbei können gemäß den Ausgestaltungen der Erfindung mehrere Nebenbedingungen (Kopplungen) unterschieden werden. Insbesondere im Hinblick darauf, ob die zwei Energien komplementär sind oder Substitute ausbilden. Sind die zwei Energien komplementär, so sind diese in ihrer Form verschieden, jedoch voneinander abhängig, beispielsweise über eine lineare mathematische Beziehung. Sind die Energien Substitute, so kann die eine der Energien durch die andere der Energien und umgekehrt wenigstens teilweise ersetzt werden. Die Einzelheiten dieser Substitution kann wiederum als Nebenbedingung mathematisch formuliert werden und ist Gegenstand von Ausgestaltungen der vorliegenden Erfindung.

Die Steuerungszentrale löst das Optimierungsproblem. Als Lösung liegt somit ein möglichst optimaler beziehungsweise effizienter Austausch der Energien vor. Durch die koppelnde Nebenbedingung wird beispielsweise sichergestellt, dass ein Energiesubsystem dann elektrische Energie zur Erzeugung oder Bereitstellung einer Wärme und/oder Kälte bezieht, wenn ein Bedarf an Wärme beziehungsweise Kälte innerhalb des Energiesystems vorliegt. Der Austausch der elektrischen Energie bedingt somit den Austausch der Wärme/Kälte oder der Austausch der Wärme/Kälte bedingt den Austausch der elektrischen Energie.

In einem dritten Schritt des Verfahrens wird der Austausch der ersten und zweiten Energie gemäß der Lösung des Optimierungsproblems durch die Steuerungszentrale gesteuert.

Dadurch wird der gekoppelte Austausch tatsächlich durchgeführt beziehungsweise realisiert. Demnach können der erste und zweite Schritt bevorzugt computergestützt sein.

Hierbei kann ergänzend innerhalb der Energiesubsysteme eine Regeleinheit vorgesehen sein, die sicherstellt, dass die energietechnischen Anlagen des jeweiligen Energiesubsystems gemäß der Lösung des Optimierungsproblems gesteuert werden. Mit anderen Worten stellt die Regeleinheit sicher, dass der durch das Lösen des Optimierungsproblems ermittelte Betriebsfahrplan abgefahren wird. Hierbei werden somit die jeweiligen energietechnischen Anlagen entsprechend angesteuert und das jeweilige Energiesubsystem entsprechend der Vorgaben für die Interaktion mit den anderen Teilnehmern entsprechend betrieben.

Das Verfahren kann für ein festes Zeitintervall durchgeführt werden. Folgen die Zeitintervalle aufeinander, so kann für jedes Zeitintervall das Verfahren durchgeführt werden. Somit wird das Verfahren gemäß der Zeitintervalle periodisch durchgeführt. Mit anderen Worten kann das Verfahren Bestandteil einer modellprädikativen Regelung sein, wobei die Regelung zur Steuerung des Austausches der Energien vorgesehen ist.

Zur numerischen Lösung des Optimierungsproblems können mehrere Algorithmen verwendet werden. Insbesondere werden MCP-Löser verwendet, die auf dem PATH-Algorithmus, einer stabilisierten Newton-Methode, basieren. Der Rechenaufwand für die Lösung von MCP-Aufgaben ist höher, aber ist im Kontext der Anwendung bei lokalen Energiemärkten realisierbar. Das Optimierungsproblem kann ebenfalls zu einem Mixed Complementary Problem (MCP) erweitert werden.

Ein Grundgedanke der vorliegenden Erfindung ist, den Austausch verschiedener Energieformen zwischen Energiesubsystemen eines Energiesystems zu ermöglichen. Da die einzelnen Energiesubsysteme verschiedene Energieformen erzeugen, bereitstellen, speichern und/oder verbrauchen, können die entsprechenden energietechnischen Anlagen nicht unabhängig voneinander betrieben werden. Mit anderen Worten ist eine Kopplung des Austausches der verschiedenen Energieformen erforderlich. Für eine solche Kopplung stellt die vorliegende Erfindung eine technische Lösung bereit. Die Kopplung wird als Nebenbedingung beim Optimierungsproblem, welches dem Steuern des Austausches zugrunde liegt, implementiert. Hierdurch können die effizientesten energietechnischen Anlagen des Energiesystems Überschüsse effektiv für die anderen Energiesubsystemen bereitstellen.

Weiterhin wird die bereits vorhandene Infrastruktur des Energiesystems, beispielsweise die energietechnischen Anlagen und/oder Energienetze, bestmöglich ausgelastet. Aus Marktsicht ermöglicht erst die vorliegende Erfindung eine Teilnahme der Energiesubsysteme an einem lokalen Energiemarkt, da erst dadurch entsprechende Angebote abgegeben werden können, und die Energiesubsysteme auch in der Lage sind, diese technisch und physikalisch zu erfüllen.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Energiesystem
- S1: erster Schritt
- S2: zweiter Schritt
- S3: dritter Schritt
- E1: erste Energie
- E2: zweite Energie
- 21: Heizkessel
- 22: Blockheizkraftwerk
- 23: Photovoltaikanlage
- 24: Kompressionskältemaschine
- 25: Wärmeverbraucher
- 26: Stromverbraucher
- 27: Kälteverbraucher
- 41: Gasnetz
- 42: Wärmenetz
- 43: Stromnetz
- 44: Kältenetz

## Patentansprüche

1. Verfahren zum Steuern eines Austausches von Energien (E1, E2) mittels einer Steuerungszentrale innerhalb eines Energiesystems (1) mit mehreren Energiesubsystemen (21,..., 27), wobei die Energiesubsysteme (21,...,27) für den Austausch mittels eines für die jeweilige Form der Energie (E1, E2) spezifischen Energienetzes (41,...,44) wenigstens teilweise untereinander verbunden sind, **gekennzeichnet durch** die Schritte:
- Empfangen wenigstens eines Datensatzes aus wenigstens einem der Energiesubsysteme (21,...,27) durch die Steuerungszentrale, wobei der Datensatz wenigstens jeweils einen maximalen Wert für eine erste und zweite über das Energiesubsystem (21,...,27) auszutauschende Energie (E1, E2) umfasst;
- Lösen eines Optimierungsproblems durch die Steuerungszentrale basierend auf dem empfangenen Datensatz, wobei das Lösen unter einer die Energien (E1, E2) koppelnden derartigen Nebenbedingung erfolgt, dass ein Austausch der ersten Energie (E1) einen Austausch der zweiten Energie (E2) bedingt; und
- Steuern des Austausches der ersten und zweiten Energie (E1, E2) gemäß der Lösung des Optimierungsproblems durch die Steuerungszentrale.

2. Verfahren gemäß Anspruch 1, bei dem die Form der ersten Energie (E1) von der Form der zweiten Energie (E2) verschieden ist.

3. Verfahren gemäß Anspruch 1 oder 2, bei dem die erste Energie (E1) durch das Energiesubsystem (21,...,27) zur Erzeugung der zweiten Energie (E2) verwendet wird.

4. Verfahren gemäß einem der vorhergehenden Ansprüche, bei dem die erste und zweite Energie (E1, E2) durch das Energiesubsystem (21,...,27) erzeugt werden.

5. Verfahren gemäß einem der vorhergehenden Ansprüche, bei dem die erste und/oder zweite Energie (E1, E2) durch das Energiesubsystem (21,...,27) zur Erzeugung einer dritten Energie verwendet werden.

6. Verfahren gemäß einem der vorhergehenden Ansprüche, bei dem die Nebenbedingung durch ***aP*₁(*t*)** ≤ ***bP₂*(*t*)** festgelegt wird, wobei ***P*₁(*t*)** die zur ersten Energie (E1) zugehörige zeitabhängige Leistung und ***P*₂(*t*)** die zur zweiten Energie (E2) zugehörige zeitabhängige Leistung ist, und ***a,b*** Konstanten sind.

7. Verfahren gemäß einem der vorhergehenden Ansprüche, bei dem die Nebenbedingung durch ***P*₁(*t*)Δ*t*/*E*_{max,1}** + ***P*₂(*t*)Δ*t*/*E*_{max,2} ≤ 1** festgelegt wird, wobei ***P*₁(*t*)** die zur ersten Energie (E1) zugehörige zeitabhängige Leistung und ***P*₂(*t*)** die zur zweiten Energie (E2) zugehörige zeitabhängige Leistung ist, ***E*_{max,1}** der maximale Wert der ersten Energie (E1), ***E*_{max,2}** der maximale Wert der zweiten Energie (E2), und **Δ*t*** die Zeitschrittweite beim Lösen des Optimierungsproblems ist.

8. Energiesystem (1), umfassend eine Steuerungszentrale zur Steuerung eines Austausches von Energien (E1, E2) zwischen mehreren Energiesubsystemen (21,...,27) des Energiesystems (1), **dadurch gekennzeichnet, dass** die Steuerungszentrale zur Durchführung eines Verfahrens gemäß einem der vorhergehenden Ansprüche ausgebildet ist.

9. Energiesystem (1) gemäß Anspruch 8, **dadurch gekennzeichnet, dass** die Energiesubsysteme (21,...,27) energietechnische Anlagen zur Bereitstellung und/oder zum Verbrauch der ersten und/oder zweiten Energie (E1, E2) umfassen.
